# EUROPEAN PATENT APPLICATION

(11) **EP 4 722 693 A1**
(43) Date of publication of application: **08.04.2026**
(21) Application number: 24815102.9
(22) Date of filing: 07.05.2024
(51) Int. Cl.: G01N 21/3577, G01N 21/01

(54) **ANALYSIS METHOD AND INFRARED SPECTROPHOTOMETER**

(30) Priority: 30.05.2023 JP 2023088365
(71) Applicant: SHIMADZU CORPORATION, Kyoto-shi, Kyoto 604-8511 (JP)
(72) Inventor: ARAKI, Takahisa, Kyoto-shi, Kyoto 604-8511 (JP); OTA, Hiroshi, Kyoto-shi, Kyoto 604-8511 (JP)
(74) Representative: Müller-Boré & Partner Patentanwälte PartG mbB
(86) International application number: PCT/JP2024/016931
(87) International publication number: WO 2024/247618

(57) **Abstract**

An analysis method includes: a step of dropping a sample onto a sample plate; a step of drying the sample (S') on the sample plate; a step of causing infrared light to be incident on the dried sample (S) and detecting reflected light with a photodetector; and a step of identifying a component of the sample (S) based on a light-receiving signal of the photodetector. The sample plate includes one or more wells (W) onto which the sample is dropped. The periphery of the well (W) of the sample plate is subjected to processing for retaining the dropped sample in the well (W).

## Description

### TECHNICAL FIELD

The present disclosure relates to an analysis method and an infrared spectrophotometer.

### BACKGROUND ART

Infrared spectroscopy is an analysis method for analyzing components in a sample by irradiating the sample to be measured with infrared light and detecting transmitted light or reflected light. Infrared spectroscopy is performed by an infrared spectrophotometer.

For example, Japanese Unexamined Patent Application Publication (Translation of PCT Application) No. 2000-505551 (Patent Literature 1) discloses a configuration for analyzing the structure of lymphocytes in blood using a Fourier transform infrared spectrophotometer.

Analysis of organic substances such as proteins, lipids, DNA, and RNA, and microorganisms such as bacteria in a liquid sample is performed, for example, as follows. First, a liquid sample is dropped onto a prism of an infrared spectrophotometer and dried. Next, infrared light is made incident on the prism, and a spectrum of reflected light from the prism is acquired. Then, information such as structure, physical properties, and bacterial species is acquired based on the spectrum.

### CITATION LIST

### PATENT LITERATURE

[Patent Literature 1] Japanese Unexamined Patent Application Publication (Translation of PCT Application) No. 2000-505551

### SUMMARY OF INVENTION

### TECHNICAL PROBLEM

However, prisms generally used in infrared spectrophotometers are expensive, and users have had to clean the surface of the prism after each analysis in order to use the prism repeatedly.

Therefore, there has been a demand for an infrared spectrophotometer that can easily analyze components in a liquid sample without using a prism, which requires troublesome cleaning work.

The present disclosure has been made to solve such a problem, and an object thereof is to provide an infrared spectroscopy method that can easily analyze components contained in a liquid sample.

### SOLUTION TO PROBLEM

A first aspect of the present invention is an analysis method, comprising: a step of dropping a sample onto a sample plate; a step of drying the sample on the sample plate; a step of causing infrared light to be incident on the dried sample and detecting reflected light with a photodetector; and a step of identifying a component of the sample based on a light-receiving signal of the photodetector. The sample plate includes one or more wells onto which the sample is dropped. The periphery of the well of the sample plate is subjected to processing for retaining the dropped sample in the well.

Another aspect of the present invention is an infrared spectrophotometer. The infrared spectrophotometer includes a sample plate, an infrared light source, a photodetector, and a control device. The sample plate includes one or more wells onto which samples are respectively dropped. The infrared light source emits infrared light that is incident on the sample dried on the sample plate. The photodetector detects reflected light corresponding to the incidence of the infrared light. The control device identifies a component of the sample based on a light-receiving signal of the photodetector. The periphery of the well of the sample plate is subjected to processing for retaining the dropped sample in the well.

### ADVANTAGEOUS EFFECTS OF INVENTION

According to the present disclosure, it is possible to provide an infrared spectroscopy method that can easily analyze components contained in a liquid sample.

### BRIEF DESCRIPTION OF DRAWINGS

[FIG. 1] FIG. 1 is a schematic diagram showing a configuration of an infrared spectrophotometer according to an embodiment.
[FIG. 2] FIG. 2 is a diagram for explaining a configuration of an infrared spectrophotometer according to a comparative example.
[FIG. 3] FIG. 3 is a schematic diagram showing a configuration inside a sample chamber according to the embodiment.
[FIG. 4] FIG. 4 is a top view of an example of a sample plate according to the embodiment.
[FIG. 5] FIG. 5 is a diagram for explaining an example of processing on the periphery of a well.
[FIG. 6] FIG. 6 is a diagram for explaining an example of processing on the periphery of a well.
[FIG. 7] FIG. 7 is a flowchart of an analysis method according to the embodiment.

### DESCRIPTION OF EMBODIMENTS

Hereinafter, embodiments of the present invention will be described in detail with reference to the drawings. Note that the same or corresponding parts in the drawings are denoted by the same reference numerals, and a description thereof will not be repeated.

### [1. Configuration of Infrared Spectrophotometer]

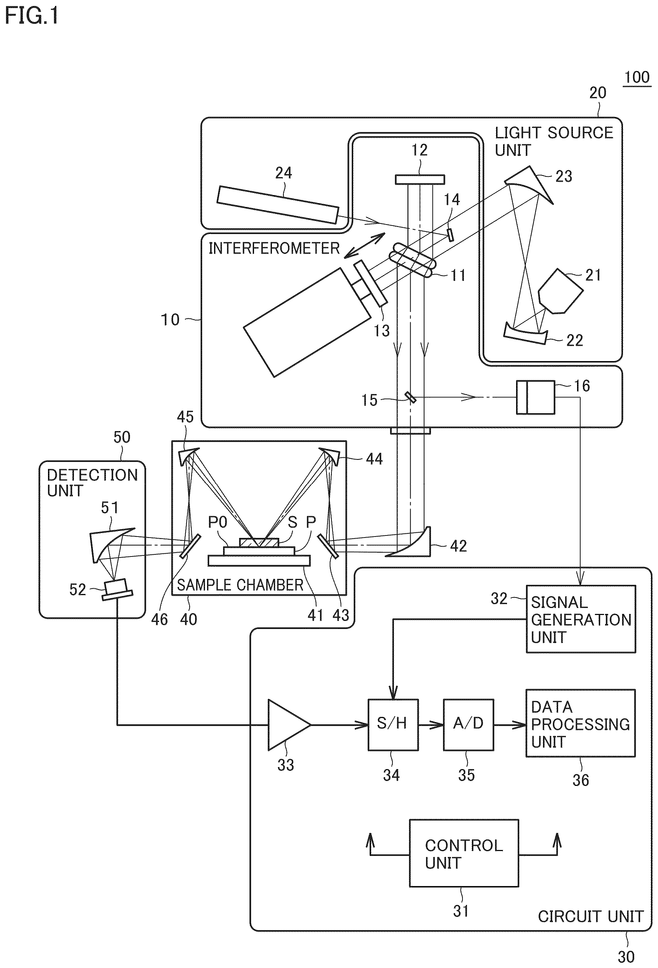

FIG. 1 is a schematic diagram showing a configuration of an infrared spectrophotometer according to an embodiment. In one embodiment, the infrared spectrophotometer 100 is a Fourier transform infrared spectrophotometer. The infrared spectrophotometer 100 includes an interferometer 10, a light source unit 20, a circuit unit 30, a sample chamber 40, and a detection unit 50.

The interferometer 10 includes a beam splitter 11, a fixed mirror 12, a moving mirror 13, and the like, and the light source unit 20 includes an infrared light source 21, a condensing mirror 22, a collimator mirror 23, and the like. The interferometer 10 and the light source unit 20 generate interference infrared light for performing spectrum measurement. That is, infrared light emitted from the infrared light source 21 is irradiated onto the beam splitter 11 via the condensing mirror 22 and the collimator mirror 23, where it is split in two directions toward the fixed mirror 12 and the moving mirror 13.

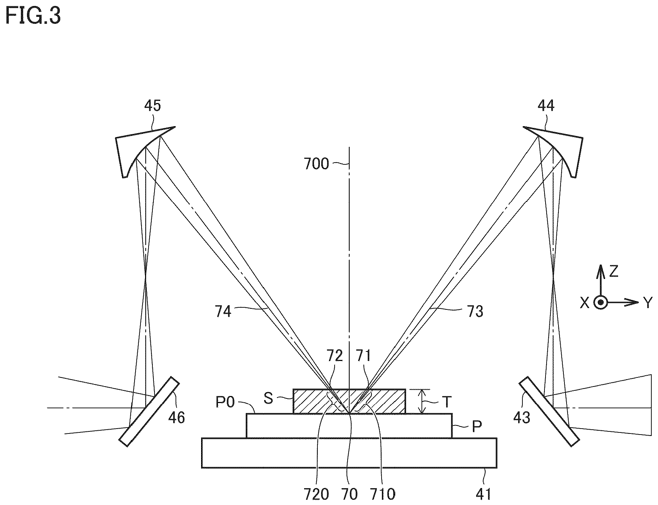

The light beams reflected by the fixed mirror 12 and the moving mirror 13, respectively, are recombined by the beam splitter 11 and sent to an optical path toward a parabolic mirror 42. At this time, since the moving mirror 13 reciprocates back and forth (in the direction of the arrow in FIG. 1), the combined light becomes interference light (interferogram) whose amplitude fluctuates over time. The light condensed by the parabolic mirror 42 is irradiated into the sample chamber 40, and the light that has passed through a sample S placed in the sample chamber 40 is incident on the detection unit 50. In this specification, the simple description "sample S" refers to a sample that has been dropped onto a sample plate P and dried. The sample in the dried state is a solid substance that may be referred to as a "crystal" or "sample crystal" by those skilled in the art. On the other hand, in this specification, "liquid sample" refers to a liquid sample before it becomes the solid substance by drying. The configuration related to the measurement of the sample S in the sample chamber 40 will be described later with reference to FIG. 3. The light incident on the detection unit 50 is condensed onto a photodetector 52 by an ellipsoidal mirror 51.

The infrared spectrophotometer 100 has a main interferometer for obtaining an interferogram, and a control interferometer for controlling the sliding speed of the moving mirror 13 and generating a timing signal for sampling a signal obtained by the detector of the main interferometer. The control interferometer is composed of a laser light source 24, a mirror 14, the beam splitter 11, the fixed mirror 12, the moving mirror 13, and the like, and generates laser interference light for obtaining an interference fringe signal. That is, light emitted from the laser light source 24 is irradiated onto the beam splitter 11 via the mirror 14, and becomes interference light in the same manner as the infrared light described above, and is sent in the direction of the parabolic mirror 42. Since this laser interference light travels as a light beam with a very small diameter, it is reflected by a mirror 15 inserted in the optical path and introduced into a photodetector 16.

The optical components centered on the interferometer 10 are placed in an airtight chamber where humidity is controlled. This is mainly to protect optical components such as the beam splitter 11, which uses KBr having deliquescent properties as a substrate.

A light-receiving signal of the photodetector 16, that is, a laser light interference fringe signal, is input to a signal generation unit 32, where a pulse signal for sampling a light-receiving signal for the infrared interference light is generated. The light-receiving signal obtained by the photodetector 52 is amplified by an amplifier 33, sampled at the timing of the pulse signal by a sample-and-hold circuit (S/H) 34, and then converted into digital data by an A/D converter (A/D) 35. A data processing unit 36 performs a Fourier transform on this data to create an absorption spectrum, and further creates a transmittance spectrum using background data. A series of measurement operations is executed under the control of a control unit 31. The control unit 31, the signal generation unit 32, the amplifier 33, the sample-and-hold circuit (S/H) 34, the A/D converter (A/D) 35, and the data processing unit 36 are included in the circuit unit 30.

### [2. Comparison with Infrared Spectrophotometer according to Comparative Example]

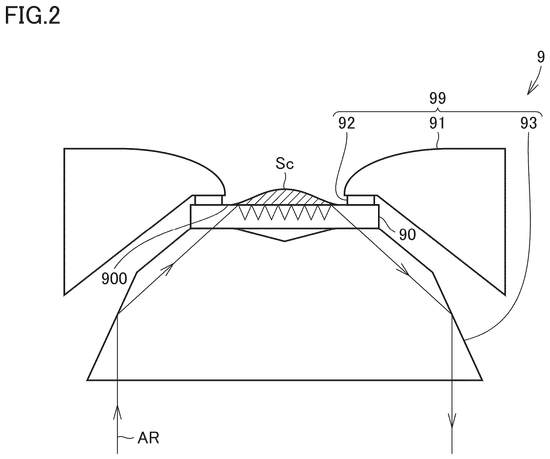

FIG. 2 is a diagram for explaining a configuration around a sample S in an infrared spectrophotometer according to a comparative example. Specifically, a part of a prism unit 9 for holding the sample in the sample chamber in the infrared spectrophotometer according to the comparative example is shown.

The prism unit 9 includes a prism 90 and a holder 99 around the prism 90. The prism 90 is formed integrally with the holder 99. Therefore, the prism 90 is always handled as a part of the prism unit 9. For example, when the prism 90 is removed from/attached to the infrared spectrophotometer, the entire prism unit 9 is removed from/attached to the infrared spectrophotometer. Also, when the surface of the prism 90 is cleaned, the prism 90 is cleaned in a state of being bonded to the holder 99.

The prism 90 has an upper surface 900 on which a sample is placed at the time of measurement. The prism 90 is made of, for example, a prism material of diamond. When the measurement target is a liquid sample, the liquid sample is dropped on the upper surface 900 in advance, and a sample Sc in a dried state is measured.

The holder 99 is a member for supporting the prism. The holder 99 includes a first member 91, a second member 92, and a third member 93. The first member 91, the second member 92, the prism 90, and the third member 93 are bonded in this order.

An arrow AR indicates an optical path of infrared light incident on the prism unit 9. The position of the prism unit 9 is precisely adjusted corresponding to the position of an optical system that makes infrared light incident on the sample chamber and receives the infrared light emitted from the sample chamber. Specifically, the position of the prism unit 9 is strictly set based on the position of the parabolic mirror 42 that makes infrared light incident on the sample chamber and the position of the ellipsoidal mirror 51 that receives infrared light from the sample chamber. The infrared light reflected from the parabolic mirror 42 is incident on a predetermined position of the third member 93 at a predetermined angle, and then incident on a predetermined position of the prism 90 at a predetermined angle. Then, the infrared light is reflected a predetermined number of times within the prism 90 (8 times in the example of FIG. 2). The predetermined number of times is designed in advance based on the material of the prism 90. In the reflection of the predetermined number of times, each time the infrared light reaches the interface between the upper surface 900 of the prism 90 and the sample Sc, seepage of the infrared light into the sample Sc (evanescent wave) occurs. Then, as the evanescent wave is absorbed by the sample Sc, absorption of an infrared component of a predetermined wavelength corresponding to the component of the sample Sc is performed. Then, after being reflected a predetermined number of times in the prism 90, the infrared light is incident on a predetermined position of the third member 93 at a predetermined angle, and then is incident on the ellipsoidal mirror 51 at a predetermined angle.

However, the prism 90 is generally expensive, and disposing of it was not realistic from a cost perspective. Therefore, the user cleaned the upper surface 900 of the prism 90 each time the sample Sc was replaced and used the same prism 90 repeatedly. Infrared spectrophotometers are generally highly sensitive, and if even a small amount of the sample Sc from the previous analysis remains, it can become noise in the next analysis and affect the analysis results. Therefore, the user needed to remove the sample S on the upper surface 900 without any residue for each analysis.

Specifically, the user removed the sample Sc on the upper surface 900 by absorbing it with paper or the like (Kimwipes, cotton swabs), scraping it off, or wiping it off with paper or the like soaked in alcohol. However, as described above, the prism 90 is integrated with the surrounding holder 99, and cleaning was not easy. In particular, the end face of the prism 90 (for example, near the second member 92) was difficult to clean. Furthermore, as described above, since the prism 90 is an expensive component, care had to be taken in handling it during cleaning. From the above, cleaning the prism 90 every time the sample Sc was replaced was a burden for the analysis.

Therefore, in the infrared spectrophotometer 100 according to the present embodiment, a sample plate P subjected to predetermined processing is used instead of the prism 90. Specifically, in the sample plate P, the periphery of a well to which a liquid sample is dropped is processed so that the liquid sample during drying remains in the well. This makes it possible to form a sample S having a predetermined thickness sufficient for analysis in the well. Therefore, by causing infrared light to be incident on the sample S and detecting the reflected light, a spectrum in which infrared components corresponding to the components in the sample are absorbed according to the thickness of the sample S can be obtained. This makes it possible to perform infrared spectroscopic analysis with high sensitivity without using the prism 90.

### [3. Configuration inside Sample Chamber]

FIG. 3 is a schematic diagram showing a configuration inside the sample chamber 40 according to the embodiment. With reference to FIG. 3, mirrors 43 and 46, ellipsoidal mirrors 44 and 45, the sample plate P, and a stage 41 are installed in the sample chamber 40. In FIG. 3, a line 700 located at the center between infrared light incident on the sample S and infrared light reflected by the stage 41 is defined as a Z-axis direction, and a plane orthogonal to the Z-axis is defined as an XY plane. In one embodiment, the infrared spectrophotometer 100 is used in a state where the negative Z-axis direction is installed so as to substantially coincide with the direction of gravity. In other words, the stage 41 and the sample plate P are used in a state of being installed substantially horizontally.

The light condensed by the parabolic mirror 42 is reflected by the mirror 43 and is incident on the ellipsoidal mirror 44 inside the sample chamber 40. The light condensed by the ellipsoidal mirror 44, after being incident on the sample S, passes through the inside of the sample S and is reflected by an upper surface P0 of the sample plate P. The reflected infrared light (reflected light), after passing through the sample S again, is incident on the ellipsoidal mirror 45. The light condensed by the ellipsoidal mirror 45 is reflected by the mirror 46 and is incident on the ellipsoidal mirror 51 of the detection unit 50. In the example of FIG. 3, a point at which infrared light is incident on the sample S is indicated as an incident point 71, a point at which infrared light is reflected by the sample plate P is indicated as a reflection point 70, and a point at which infrared light is emitted from the sample S is indicated as an emission point 72. In the example of FIG. 3, a first optical path 710 connecting the incident point 71 and the reflection point 70, and a second optical path 720 connecting the reflection point 70 and the emission point 72 from the sample S are also shown.

With this configuration, infrared light that has passed through the inside of the sample S is emitted from the sample chamber 40. The optical path length of the infrared light inside the sample S is the sum of the length of the first optical path 710 and the length of the second optical path 720. From the infrared light, infrared components of wavelengths corresponding to the components of the sample are absorbed while passing through the first optical path 710 and the second optical path 720. This allows a spectrum reflecting the absorption to be created. The length of the first optical path 710 and the length of the second optical path 720 are proportional to the thickness T of the sample S in a dried state.

In the example of FIG. 3, the reflection point 70 corresponds to an intersection point (focal point) of a central axis of infrared light incident on the sample (alternate long and short dash line 73 in FIG. 3) and a central axis of infrared light emitted from the sample (alternate long and short dash line 74 in FIG. 3). In another example, the infrared spectrophotometer 100 may be configured such that a focus is placed on an upper surface S0 of the sample S or inside the sample S. Even with this configuration, infrared spectroscopy can be performed more easily than in the comparative example using the prism 90.

The sample plate P is installed on the stage 41. In one embodiment, the stage 41 is a two-axis (XY-axis) stage, and the position of the sample plate P in the XY directions can be moved by moving the stage 41 in the XY directions. This allows the position of the sample S desired for analysis to be moved to a position to be subjected to analysis (a position where infrared light from the ellipsoidal mirror 44 is incident).

In one embodiment, the sample S is one obtained by dropping and drying an aqueous solution containing protein. The component of the sample S is not limited to protein, and may include, for example, DNA, RNA, lipids, microorganisms such as bacteria, or other chemical substances. The solvent for the component of the sample S is not limited to water, and may be, for example, oil or an organic solvent.

The sample plate P is formed of a material that does not transmit infrared light. More specifically, the sample plate P is formed such that at least the portion within the well W on the upper surface P0 does not transmit infrared light. With this configuration, it is possible to obtain a spectrum of infrared light that has passed through the sample S, been reflected on the sample plate P, and then passed through the sample S again. In other words, compared to the case where the sample S is passed through only once, the optical path length of the infrared light in the sample S that is reflected in the spectrum is doubled. Therefore, the sample S can be analyzed with twice the sensitivity compared to the spectrum of infrared light that has passed through the sample S only once.

As a specific example, the sample plate P contains a metal that does not transmit infrared light. A first example of the sample plate P is a plate-like member made of gold. Since gold has a high reflectance for infrared light, this configuration can increase the reflectance of the infrared light of the sample plate P. A second example of the sample plate P is one in which the surface of a plate-like member containing a relatively inexpensive material is coated with gold. The relatively inexpensive material is, for example, stainless steel, aluminum, or silicon. A third example is one in which a plate-like member formed of the relatively inexpensive material described above is coated with silver. Silver has a high reflectance, though not as high as gold, and is less expensive than gold.

In the second example or the third example, the reflectance of infrared light on the upper surface P0 of the sample plate P is high. On the other hand, in the second example or the third example, since the sample plate P can be manufactured at a lower cost than in the first example, the cost is not excessive even if the sample plate P is disposable, and no cost problem arises. In other words, it is easy to make the sample plate P disposable even in consideration of cost. By making the sample plate P disposable, it is not necessary to clean the sample plate P for each measurement, and the burden on the user can be reduced. Also, it is preferable that the sample plate P before use is stored in a state where no substance is attached to the surface (upper surface P0) onto which the liquid sample is dropped. For example, the sample plate P is sealed in a plastic bag immediately after manufacture. If the sample plate P before use is stored in this way, the possibility that a substance attached to the sample plate P before use becomes measurement noise can be suppressed. From a similar viewpoint, when the sample plate P is used repeatedly instead of being disposable, it is preferable that the upper surface P0 of the sample plate P is cleaned with alcohol or the like after use and/or before use.

Strictly speaking, the reflected light includes specularly reflected light traveling toward the ellipsoidal mirror 45 and scattered light traveling in all directions, but since both pass through the sample S and reflect the components of the sample S, they are collectively referred to as "reflected light" in this specification.

### [4. Sample Plate]

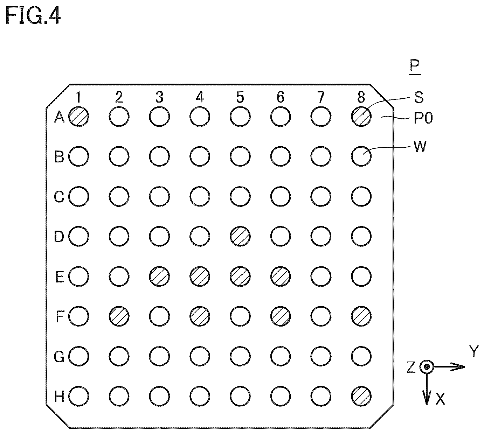

Next, the structure of the sample plate P will be described with reference to FIGS. 4 to 6.

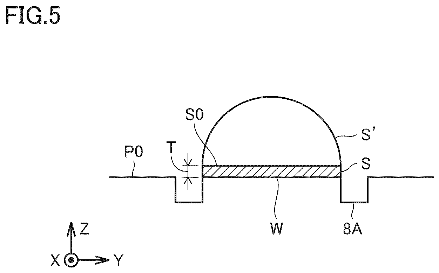

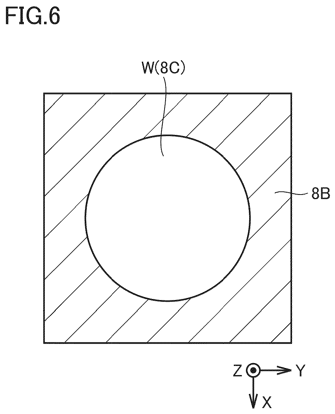

FIG. 4 is a top view of an example of a sample plate according to the embodiment. The sample plate P includes one or more wells W onto which a liquid sample is dropped. In the example of FIG. 4, 8×8 = 64 wells W are formed on the sample plate P. In this way, since the sample plate P includes a plurality of wells W, a plurality of samples can be measured at once. The periphery of the well W of the sample plate P is subjected to processing (see 8A, 8B in FIGS. 5 and 6) for retaining the liquid sample during drying in the well W. FIG. 4 shows that on some wells W, a sample S is formed in which the thickness T in the Z-axis direction is substantially constant and an upper surface S0 is substantially flat.

In one embodiment, the processing on the periphery of the well W includes forming a groove 8A around the well W. FIG. 5 shows the state of a liquid sample during drying after being dropped into a well W around which a groove 8A is formed. With reference to FIG. 5, by providing the groove 8A around the well W, the liquid sample during drying is retained in the well W in a predetermined shape (see S' in FIG. 5) due to surface tension. Then, by drying the liquid sample retained in the predetermined shape in the well W, a sample S spread with a substantially constant thickness T on the well W can be obtained. The drying of the liquid sample dropped into the well W may be performed outside the sample chamber 40 or inside the sample chamber 40. According to one embodiment, after dropping the liquid sample into the well W, the sample plate P is placed in the sample chamber 40 after a sample S in a dried state is obtained.

In another embodiment, the processing on the periphery of the well W includes applying a hydrophobic member 8B around the well W. FIG. 6 is a top view of a well W to the periphery of which a hydrophobic member 8B has been applied. Applying the hydrophobic member 8B means, for example, applying a hydrophobic substance (for example, fluorine). Alternatively, it means, for example, attaching a hydrophobic sheet. In this case as well, similarly to the example of FIG. 5, the liquid sample during drying can be retained in the well W in a predetermined shape due to surface tension. Then, by drying the liquid sample retained in the predetermined shape in the well W, a sample S spread with a substantially constant thickness T on the well W can be obtained.

As described above, due to the processing on the periphery of the well W, the sample S spreads over the well W with a substantially constant thickness T. As a result, regardless of the position on the sample S (position on the XY plane, the same applies hereinafter) where infrared light is incident, the optical path length in the sample S is substantially the same, and the obtained absorption spectrum is also substantially the same.

On the other hand, when the periphery of the well W is not processed, the position and shape of the liquid sample dropped at the position of the well W are not limited by the processing. Therefore, the thickness of the well W can also vary greatly depending on the position. Also, for example, a part of the liquid sample may protrude from the well W. Therefore, the obtained spectrum may differ depending on the position on the sample S where the infrared light is incident.

As described above, the sample plate P according to the present embodiment is effective for preventing sensitivity unevenness from occurring due to the position on the sample S where infrared light is incident.

Further, by processing the periphery of the well W, the liquid sample dropped into the well W is less likely to spread outside the well W. As a result, when the amount of the liquid sample is a predetermined amount or more, if the periphery of the well W is processed, the liquid sample can be placed on the sample plate P in a more raised shape than when the processing is not performed (for example, when dropped onto the prism 90). In other words, when the periphery of the well W is processed, the height of the droplet of the liquid sample dropped on the sample plate P in the Z-axis direction becomes higher than when the processing is not performed. This also allows the thickness of the sample S formed by drying the liquid sample to be formed thicker.

The penetration depth of the evanescent wave into the sample in the infrared spectrophotometer according to the comparative example is about the same as the wavelength (for example, several µm). On the other hand, in the infrared spectrophotometer according to the embodiment, the depth to which infrared light penetrates the sample is about the same as the thickness of the sample (for example, about several hundred µm). As described above, the infrared spectrophotometer 100 according to the embodiment can secure an optical path length of infrared light in the sample that is equal to or greater than that of the infrared spectrophotometer according to the comparative example, without repeatedly irradiating the sample with infrared light multiple times using the prism 90 as in the infrared spectrophotometer according to the comparative example. This enables high-sensitivity component analysis in the infrared spectrophotometer 100 according to the embodiment.

As described above, in the infrared spectrophotometer 100 according to the present embodiment, it is possible to perform analysis with good sensitivity without repeatedly causing infrared rays to enter a wide sample surface as in the infrared spectrophotometer using the prism 90 according to the comparative example. More specifically, a first area of the sample S formed on the sample plate P according to the embodiment may be smaller than a second area of the sample Sc formed on the prism 90 according to the comparative example. In this specification, the simple description "area" indicates the area on the XY plane. More specifically, the first area indicates the area of the portion in contact with the sample S on the sample plate P. The second area indicates the area of the portion in contact with the sample Sc on the prism 90. Therefore, the area of the well W on the sample plate P can also be made smaller than the area of the prism 90. Although not limited to this, the diameter of the well W is, for example, 2 mm or more and 3 mm or less. Therefore, even if the sample plate P is designed to include a plurality of wells W, the area of the sample plate P does not become too large. This facilitates handling of the sample plate P during analysis or preparation for analysis.

As described above, the sample S on the sample plate P according to the embodiment can have a smaller area and a larger thickness than the sample Sc on the prism 90 according to the comparative example. This has the advantage that the amount of liquid sample required for analysis can be reduced compared to the case of using the prism 90. Although not limited to this, for example, whereas 60 µl of liquid sample is required in the comparative example, an amount of 3 µl or more and 10 µl or less of liquid sample dropped into the well W is sufficient in the sample plate P according to the present embodiment.

By using the sample plate P according to the embodiment, in addition to increasing the thickness of the sample S on the sample plate P, it can be controlled to have an appropriate thickness. In infrared spectroscopy, it is beneficial to be able to control the thickness of the sample S.

For example, if the thickness of the sample S is too large, most of the infrared light incident on the sample S may be absorbed inside the sample S, and infrared light of sufficient intensity to analyze the sample S may not be emitted from the sample S. In such a case, it is necessary to reduce the thickness of the sample S. However, on a sample plate where there is no restriction on the position of the liquid sample on the XY plane, even if the amount of dropped liquid sample is reduced, the radial spread of the liquid sample on the sample plate becomes smaller, and the thickness of the liquid sample does not change. Therefore, the thickness of the dried sample cannot be reduced either. On the other hand, in the sample plate P according to the present embodiment, the well W restricts the radial spread of the liquid sample on the sample plate P. Therefore, by reducing the amount of dropped liquid sample, the thickness of the liquid sample becomes smaller. Therefore, the thickness of the sample S can also be reduced.

On the other hand, when infrared light is hardly absorbed by the sample S on the sample plate P, it is necessary to increase the thickness of the sample S. In this case as well, if there is no restriction on the position of the liquid sample on the XY plane, even if the amount of dropped liquid sample is increased, the radial spread of the liquid sample on the sample plate becomes larger, and the thickness of the liquid sample does not change. Therefore, the thickness of the dried sample cannot be increased either. On the other hand, in the sample plate P according to the present embodiment, the well W restricts the spread of the liquid sample on the sample plate P. Therefore, by increasing the amount of dropped liquid sample, the thickness of the liquid sample becomes larger. Therefore, the thickness of the sample S can also be increased.

As described above, on the sample plate P, the thickness of the sample S can be controlled to an appropriate value. To explain in more detail, on the sample plate P, since the liquid sample remains in the well W, the area of the sample S after drying is constant (equal to the area of the well W). This causes the amount of dropped liquid sample and the thickness of the sample S after drying to be correlated. For example, the thickness when 10 µl of a predetermined liquid sample is dropped is about twice the thickness when 5 µl is dropped. Therefore, for example, the user can assume the required thickness of the sample S after drying according to the information of the liquid sample (component, solute, concentration, etc.), and thus can calculate the appropriate dropped amount of the liquid sample. In this way, the user can control the thickness of the sample S after drying based on the dropped amount of the liquid sample.

In addition to processing the periphery of the well W, a hydrophilic member 8C may be applied to the well W (see FIG. 6). Applying the hydrophilic member 8C to the well W means, for example, applying a hydrophilic substance to the surface of the well W. This can make the sample during drying more likely to remain in the well W.

In one embodiment, the infrared spectrophotometer 100 according to the embodiment is used for specifying the structure of a protein and/or identifying a protein. The structure of a protein is, for example, a secondary structure such as an α-helix or a β-sheet.

In relation to this, absorption spectra for each type and/or structure of protein may be stored in a memory (not shown) of the infrared spectrophotometer 100 in advance. Then, by comparing the shape of the stored absorption spectrum with the absorption spectrum created based on the light-receiving signal of the photodetector 52, the structure of the protein may be specified and/or the protein may be identified. According to such an infrared spectrophotometer 100, the specification of the structure of the protein and/or the identification of the protein contained in a liquid sample can be easily performed. However, the structure of the protein in the sample S may be specified and/or the protein in the sample S may be identified by referring to absorption spectra for each type and/or structure of protein stored in an external database or the like.

### [5. Flowchart]

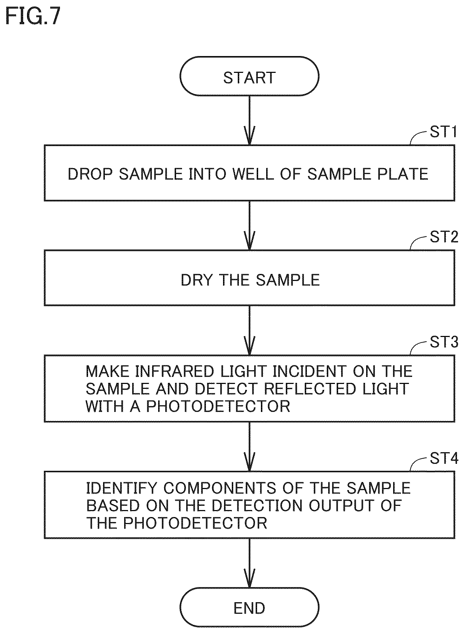

FIG. 7 is a flowchart of an analysis method according to the embodiment. The process of FIG. 7 is performed by a user using the infrared spectrophotometer 100 and experimental equipment used for preparing measurements with a normal infrared spectrophotometer.

In step (hereinafter, referred to as "ST") 1, a liquid sample is dropped onto the sample plate P. The sample plate P includes one or more wells W onto which the liquid sample is dropped. The periphery of the well W of the sample plate P is subjected to processing for retaining the dropped sample in the well W.

In ST2, the liquid sample is dried on the sample plate P.

In ST3, infrared light is made incident on the dried sample S, and reflected light is detected by the photodetector 52.

In ST4, a component of the sample S is identified based on the light-receiving signal of the photodetector 52. In one embodiment, the infrared spectrophotometer 100 creates an absorption spectrum based on the light-receiving signal of the photodetector 52, and specifies the structure of a protein and/or identifies the protein based on the absorption spectrum. For example, the infrared spectrophotometer 100 specifies the structure of the protein and/or identifies the protein by comparing the shape of an absorption spectrum for each type and/or structure of protein stored in advance with the absorption spectrum created based on the light-receiving signal of the photodetector 52. In another embodiment, the infrared spectrophotometer 100 specifies the structure of and/or identifies an organic substance such as a lipid or sugar based on the light-receiving signal of the photodetector 52. In yet another embodiment, the infrared spectrophotometer 100 identifies bacteria based on the light-receiving signal of the photodetector 52. For example, a second derivative spectrum of the spectrum is acquired for each bacterial strain, and the bacteria are classified based on the similarity of the second derivative spectra. In this case, even without assigning each peak in the absorption spectrum, the bacterial strains can be identified by performing pattern matching of the entire spectrum. The assignment of each peak is, for example, determining what kind of structure and/or protein each peak corresponds to. In this specification, the process of identifying the component of the sample S in ST4 also includes a process of determining the presence or absence of a predetermined reaction based on a change in the absorption spectrum. As described above, the process of identifying the component of the sample S in ST4 may not necessarily include shape comparison of absorption spectra.

According to the process of FIG. 7, the dried sample S can be formed such that its thickness becomes substantially constant due to the processing around the well W, and becomes thicker than in the case where the processing around the well W is not performed. By making infrared light incident on this sample S and analyzing the reflected light, stable and sufficiently sensitive infrared spectroscopic analysis can be performed without using a prism that requires cleaning for each measurement. Therefore, it is possible to provide an infrared spectroscopy method that can easily analyze components in a liquid sample with high sensitivity.

### [Aspects]

Those skilled in the art will understand that the plurality of exemplary embodiments described above are specific examples of the following aspects.

(First Aspect) An analysis method according to one aspect comprises: a step of dropping a sample onto a sample plate; a step of drying the sample on the sample plate; a step of causing infrared light to be incident on the dried sample and detecting reflected light with a photodetector; and a step of identifying a component of the sample based on a light-receiving signal of the photodetector. The sample plate includes one or more wells onto which the sample is dropped. The periphery of the well of the sample plate is subjected to processing for retaining the dropped sample in the well.

According to the analysis method of the first aspect, the dried sample can be formed such that its thickness becomes substantially constant due to the processing around the well, and becomes thicker than in the case where the processing around the well is not performed. By making infrared light incident on this sample and analyzing the reflected light, stable and sufficiently sensitive infrared spectroscopic analysis can be performed without using a prism that requires cleaning for each analysis. Therefore, it is possible to provide an infrared spectroscopy method that can easily analyze components contained in a liquid sample.

(Second Aspect) In the analysis method according to the first aspect, the sample plate includes a plurality of wells.

According to the analysis method of the second aspect, a plurality of samples can be measured at once.

(Third Aspect) In the analysis method according to the first or second aspect, the processing includes forming a groove around the well.

According to the analysis method of the third aspect, the liquid sample during drying is retained in the well in a predetermined shape due to surface tension. Then, by drying the liquid sample retained in the predetermined shape in the well, a sample spread with a substantially constant thickness on the well can be obtained.

(Fourth Aspect) In the analysis method according to the first or second aspect, the processing includes applying a hydrophobic member around the well.

According to the analysis method of the fourth aspect, the liquid sample during drying is retained in the well in a predetermined shape due to surface tension. Then, by drying the liquid sample retained in the predetermined shape in the well, a sample spread with a substantially constant thickness on the well can be obtained.

(Fifth Aspect) In the analysis method according to the first or second aspect, a hydrophilic member is applied to the well.

According to the analysis method of the fifth aspect, the sample during drying can be made more likely to remain in the well.

(Sixth Aspect) In the analysis method according to any one of the first to fifth aspects, the sample plate is formed of a material that does not transmit infrared light.

According to the analysis method of the sixth aspect, it is possible to obtain a spectrum of infrared light that has passed through the sample, been reflected on the sample plate, and then passed through the sample again.

(Seventh Aspect) In the analysis method according to the sixth aspect, the sample plate contains stainless steel, aluminum, or silicon.

According to the analysis method of the seventh aspect, it is easy to make the sample plate disposable even in consideration of cost. By making the sample plate disposable, it is not necessary to clean the sample plate for each measurement, and the burden on the user can be reduced.

(Eighth Aspect) In the analysis method according to any one of the first to seventh aspects, the sample plate is stored in a state where no substance is attached to the surface of the sample plate onto which the sample is dropped.

According to the analysis method of the eighth aspect, the possibility that a substance attached to the sample plate P before use becomes measurement noise can be suppressed.

(Ninth Aspect) In the analysis method according to any one of the first to eighth aspects, the step of identifying a component of the sample includes a step of creating an absorption spectrum based on the light-receiving signal of the photodetector, and specifying the structure of the component of the sample and/or identifying the component of the sample based on the absorption spectrum.

According to the analysis method of the ninth aspect, the specification of the structure of the component of the sample and/or the identification of the component of the sample contained in a liquid sample can be easily performed.

(Tenth Aspect) In the analysis method according to the ninth aspect, the step of specifying the structure of the component of the sample and/or identifying the component of the sample includes a step of specifying the structure of the component of the sample and/or identifying the component of the sample by comparing the shape of an absorption spectrum for each type and/or structure of the component of the sample stored in advance in an infrared spectrophotometer with the absorption spectrum created based on the light-receiving signal of the photodetector.

According to the analysis method of the tenth aspect, the specification of the structure of the component of the sample and/or the identification of the component of the sample contained in a liquid sample can be easily performed by a simple method of comparing the shapes of absorption spectra.

(Eleventh Aspect) An infrared spectrophotometer according to another aspect comprises: a sample plate including one or more wells onto which samples are respectively dropped; an infrared light source that emits infrared light incident on the sample dried on the sample plate; a photodetector that detects reflected light corresponding to the incidence of the infrared light; and a control device that identifies a component of the sample based on a light-receiving signal of the photodetector. The periphery of the well of the sample plate is subjected to processing for retaining the dropped sample in the well.

According to the infrared spectrophotometer of the eleventh aspect, the dried sample can be formed such that its thickness becomes substantially constant due to the processing around the well, and becomes thicker than in the case where the processing around the well is not performed. By making infrared light incident on this sample and analyzing the reflected light, stable and sufficiently sensitive infrared spectroscopic analysis can be performed without using a prism that requires cleaning for each analysis. Therefore, it is possible to provide an infrared spectroscopy method that can easily analyze components contained in a liquid sample.

The embodiments disclosed this time should be considered illustrative in all respects and not restrictive. The scope of the present invention is indicated by the claims rather than by the above description, and it is intended that all modifications within the meaning and scope equivalent to the claims be included.

### REFERENCE SIGNS LIST

8A Groove, 8B Hydrophobic member, 8C Hydrophilic member, 9 Prism unit, 10 Interferometer, 11 Beam splitter, 12 Fixed mirror, 13 Moving mirror, 14, 15, 43, 46 Mirror, 16, 52 Photodetector, 20 Light source unit, 21 Infrared light source, 22 Condensing mirror, 23 Collimator mirror, 24 Laser light source, 30 Circuit unit, 31 Control unit, 32 Signal generation unit, 33 Amplifier, 36 Data processing unit, 40 Sample chamber, 41 Stage, 42 Parabolic mirror, 44, 45, 51 Ellipsoidal mirror, 50 Detection unit, 70 Reflection point, 71 Incident point, 72 Emission point, 90 Prism, 91 First member, 92 Second member, 93 Third member, 99 Holder, 100 Infrared spectrophotometer, 710 First optical path, 720 Second optical path, 900, P0, S0 Upper surface, P Sample plate, S, Sc Sample, W Well.

## Claims

1. An analysis method, comprising:
a step of dropping a sample onto a sample plate;
a step of drying the sample on the sample plate;
a step of causing infrared light to be incident on the dried sample and detecting reflected light with a photodetector; and
a step of identifying a component of the sample based on a light-receiving signal of the photodetector,
wherein the sample plate includes one or more wells onto which the sample is dropped,
and
the periphery of the well of the sample plate is subjected to processing for retaining the dropped sample in the well.

2. The analysis method according to claim 1, wherein the sample plate includes a plurality of the wells.

3. The analysis method according to claim 1 or 2, wherein the processing includes forming a groove around the well.

4. The analysis method according to claim 1 or 2, wherein the processing includes applying a hydrophobic member around the well.

5. The analysis method according to claim 1 or 2, wherein a hydrophilic member is applied to the well.

6. The analysis method according to claim 1 or 2, wherein the sample plate is formed of a material that does not transmit infrared light.

7. The analysis method according to claim 6, wherein the sample plate contains stainless steel, aluminum, or silicon.

8. The analysis method according to claim 1 or 2, wherein the sample plate is stored in a state where no substance is attached to the surface of the sample plate onto which the sample is dropped.

9. The analysis method according to claim 1 or 2, wherein the step of identifying a component of the sample includes a step of creating an absorption spectrum based on the light-receiving signal of the photodetector, and specifying a structure of the component of the sample and/or identifying the component of the sample based on the absorption spectrum.

10. The analysis method according to claim 9, wherein the step of specifying the structure of the component of the sample and/or identifying the component of the sample includes:
a step of specifying the structure of the component of the sample and/or identifying the component of the sample by comparing a shape of an absorption spectrum for each type and/or structure of the component of the sample stored in advance in an infrared spectrophotometer with the absorption spectrum created based on the light-receiving signal of the photodetector.

11. An infrared spectrophotometer, comprising:
a sample plate including one or more wells onto which samples are respectively dropped; an infrared light source that emits infrared light incident on the sample dried on the sample plate;
a photodetector that detects reflected light corresponding to incidence of the infrared light; and
a control device that identifies a component of the sample based on a light-receiving signal of the photodetector,
wherein the periphery of the well of the sample plate is subjected to processing for retaining the dropped sample in the well.
